# EUROPEAN PATENT SPECIFICATION

(11) **EP 1 389 539 B1**
(45) Date of publication and mention of the grant of the patent: **11.06.2008**
(21) Application number: 03102521.6
(22) Date of filing: 13.08.2003
(51) Int. Cl.: B60B 17/00

(54) **Railway wheel with balanced stress field**
Eisenbahnrad mit homogenisiertem Spannungsfeld
Roue de véhicule ferroviaire à champs de contrainte équilibré

(30) Priority: 15.08.2002 CZ 20022774
(43) Date of publication of application: 18.02.2004
(73) Proprietor: Bonatrans Group a.s., 735 94 Bohumín (CZ)
(72) Inventor: Pavco, Jaromir, 73531 Bohumin - Skrecon (CZ); Zima, Radim, 73511 Orlova (CZ); Vampola, Vladimir, 73543, Albrechtice (CZ)
(74) Representative: Pelikanova, Ivana

(56) References cited:
- DE-A- 1 405 588
- DE-A- 4 444 077
- DE-A- 19 620 902
- DE-A- 19 630 824
- DE-B- 2 331 738
- FR-A- 912 770

## Description

### Field of the Invention

The present invention relates to the design of a railway wheel with balanced stress field, particularly to the wheel plate connecting the wheel rim with the wheel hub, wherein, the wheel plate shape is optimised so that the wheel dimensions and the wheel weight meet the mechanical and thermal stress existing during operation of the wheel.

### Background of the Invention

Railway wheels consist of three main parts, a wheel hub, a wheel rim and a wheel plate, which wheel plate provides transition from the wheel hub to the wheel rim. The known wheels have many different shapes of the wheel plate, however, the most frequently used ones are the lightweight wheels with bent and shaped plates, wherein, the wheel plate shape has an essential influence on wheel resistance to mechanical and thermal loading. In operation, the wheel stress is concentrated only in certain areas of the wheel structure. Therefore, the existing wheels are a combination of various shapes, particularly those of the wheel plate and the transition parts between the wheel hub and the wheel rim.
An important optimisation of the wheel plate shape is disclosed in the patent specification DE 44 44 077 where both, i.e. the external and the internal flank sides of the wheel plate are formed by geometrically symmetric lines that intersect in the transitional region between the wheel plate and the wheel rim. A disadvantage of this solution is particularly the complicated installation of accessories of the wheel plate and the restricted possibility of further optimisation of the wheel plate thickness and consequently also of the total weight of the wheel.

### Summary of the Invention

The above mentioned disadvantages are substantially removed by a railway wheel with balanced stress field according to the invention, which wheel is passed through by a theoretical internal plane perpendicular to the rotation axis of the wheel, which wheel comprises of a wheel rim formed by a rolling area and a flange, a wheel plate having in its cross-section its first flank side formed by a first line perpendicular to the rotation axis of the wheel, a wheel hub and of transitional regions between the wheel plate and the wheel rim and between the wheel plate and the wheel hub having in their cross-sections on both their flank sides the form of arches, which railway wheel consists in that the plane passes through a point, which point is the starting point of a transition of the second flank side of the wheel plate into the transitional region between the wheel plate and the wheel rim and the distance of the plain to the internal edge of the wheel rim is equal to 0.4 to 0.65 multiple of the wheel rim width, whereby, the other flank side of the wheel plate between the transitional regions is formed on the one hand by the other line passing through the point, which point is the place where the wheel plate starts to transit into the transitional region between the wheel plate and the wheel hub, and on the other hand by at least one further line and/or arch and where the first and the second lines intersect in a point situated on the first flank side of the wheel plate.

A preferable wheel plate design is that, where the first flank side of the wheel is formed on the one hand by the first line perpendicular to the rotation axis of the wheel and on the other hand by a second line in the section between the point where the first and the second lines intersect and a point, which point is the place where the transition of the wheel plate into the transitional region between the wheel plate and the wheel rim starts.

From the production technology point of view it is preferred if the wheel plate is formed by arches in the transition places between individual straight sections on both flank sides.

Also, it is preferred if the other flank side of the wheel plate is designed so that the arch is tangentially connected to the second line and simultaneously to the plane and/or to the section formed by two points, of which the first point is placed on the second line between the point being the starting place of the transition of the wheel plate into the transitional region between the wheel plate and the wheel hub and the intersection point of the second line with the plane, and where the other point is situated in the plane in the section from the intersection point of the plain with the other line to the point situated in the plane in a distance from the wheel rotation axis, which distance is equal with the distance of the point, in which point the first and the second lines intersect, to the rotation axis of the wheel.
For optimising the wheel plate shape it is preferred if the distance from the first line to the wheel plane is adjusted to be in the range from 0.05 to 0.15 multiple of the wheel rim width.

It is also an advantage if the distance of the point, through which the second line passes, and which is the starting point of transition of the wheel plate into the transitional region between the wheel plate and the wheel hub, to the first line is in the range from 0.2 to 0.45 multiple of the wheel width and if its distance to the rotation axis of the wheel is in the range from 0.35 to 0.45 multiple of the wheel external radius.

The distance from the point where the first and the second lines intersect on the first flank side of the wheel plate to the rotation axis of the wheel is preferably in the range from 0.65 to 0.85 multiple of the external wheel radius.

It is an advantage of this railway wheel that the wheel plate form decreases stress in critical locations of the wheel by distributing the stress into a larger volume of the wheel structure. Therefore, high gradients or stress peaks are non-existing. This allows dimensioning of the wheel plate so that it has smaller dimensions and so to decrease the wheel weight significantly. As required, the structure can be designed and optimised with regard to individual geometric dimensions by the method of final elements so that the planar area of the wheel plate can be both on the internal and the external flank sides of the wheel and the stress situation with regard to the stress size and distribution remains to be very similar.

An advantage of this solution is also the fact that on one flank side the wheel plate is formed by a planar area perpendicular to the wheel rotation axis, what allows a more simple installation of accessories, so as of noise and vibration damper or brake disk on the wheel plate.

### Brief Description of the Drawings

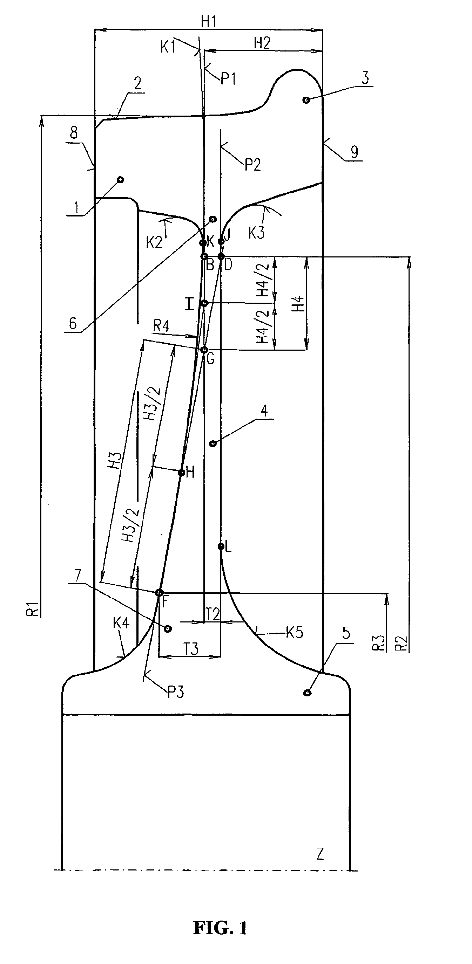

The invention in its various aspects will now be described with reference to a drawing thereof, in which Figures 1, 2, 3 and 4 show some of the possible invention embodiments always of one half of a railway wheel in cross-sectional view.

### Detailed Description of the Invention

### Example 1

A railway wheel shown in Fig. 1 has an external radius R1 and is comprised of a wheel rim 1 with a rolling surface 2 and a flange 3, of a wheel plate 4, of a wheel hub 5, of a first transitional region 6 of said wheel plate 4 into said wheel rim 1 and of a second transitional region 7 of said wheel plate 4 into said wheel hub 5. Said wheel rim 1 is limited by an external edge 8, an internal edge 9 and has width H1. The wheel plate 4 alone is defined by points L, J on the first flank side and by the points F, K on the other flank side. A plane P1 passes through the railway wheel in point K, which plane P1 is perpendicular to the rotation axis Z of the wheel and its distance H2 to the internal edge 9 of the wheel rim 1 is equal to 0.4 to 0.65 multiple of the wheel rim 1 width H1. The cross-sectional wheel plate 4 profile between the transitional regions 6 and 7 on its first wheel flank side is formed by a first line P2, which is perpendicular to the rotation axis Z of the wheel and its distance T2 to the plane P1 is equal to 0.05 to 0.15 multiple of the width H1 of the wheel rim 1. The cross-sectional profile of the wheel plate 4 between the transitional regions 6 and 7 on its first wheel flank side is formed by the first line P2, which line P2 is perpendicular to the rotation axis Z and its distance T2 to the plane P1 is equal to 0.05 to 0.15 multiple of the wheel rim 1 width H1. The cross-sectional profile of the wheel plate 4 between the transitional regions 6 and 7 on the other wheel flank side is formed on the one hand by the arch K1 with radius R4 and on the other hand with a second line P3 passing through the point F which point F is the place where the transition of the wheel plate 4 into the wheel hub 5 starts and which point F has the distance T3 from the first line P2, which distance T3 is equal to 0.2 to 0.45 multiple of the wheel rim 1 width H1 and simultaneously its distance R3 to the rotation axis Z of the wheel is in the range from 0.35 to 0.45 multiple of the external wheel radius R1. The first line P2 and the second line P3 intersect on the first flank side of the wheel plate 4 in point D, whereby, the distance R2 of the point D to the rotation axis Z of the wheel is in the range from 0.65 to 0.85 multiple of the external radius R1 of the wheel. The arch K1 on the other flank side of the wheel plate 4 is tangentially connected to the plane P1 and simultaneously to the second line P3 and to a section formed by a line segment limited by points H and I, of which the point H is situated on the second line P3 and halves the distance H3 between the point F and the point G of intersection of the second line P3 with the plane P1 and where the point I is situated in plane P1 and halves the distance H4 between the point G of intersection and the point B which is situated also in the plane P1 in the distance R2 to the axis Z of the wheel rotation, which distance R2 is equal to the distance R of the point D to this rotation axis Z. The transitional region 6 from the wheel plate 4 into the wheel rim 1 is formed by an arch K2 tangentially connected to the arch K1 in the point K and by arch K3, which is tangentially connected to the first line P2 in point J. The transitional region 7 from the wheel plate 4 into the wheel hub 5 is formed by the arch K4, which is tangentially connected to the second line P3 in point F and by arch K5, which is tangentially connected to the first line P2 in point L.

### Example 2

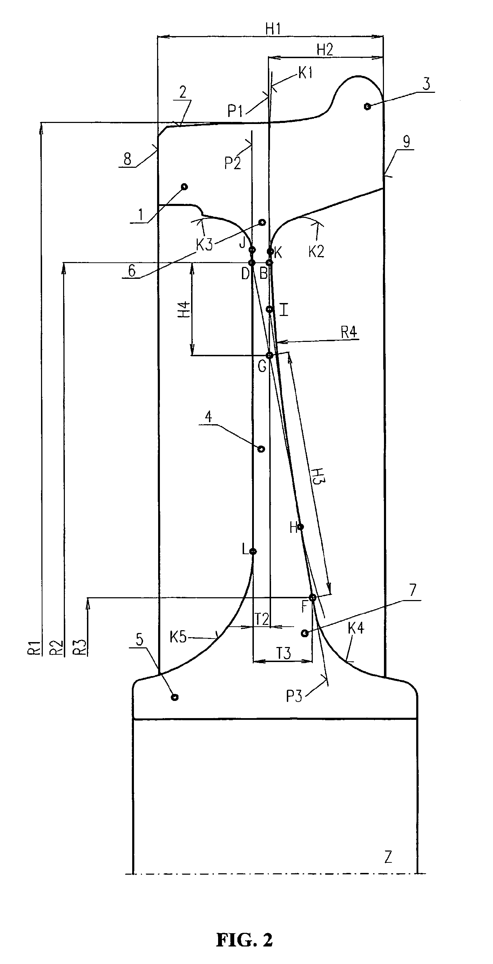

A railway wheel shown in Fig. 2 has an external radius R1 and is comprised of a wheel rim 1 with a rolling surface 2 and a flange 3, of a wheel plate 4, of a wheel hub 5, of a first transitional region 6 of said wheel plate 4 into said wheel rim 1 and of a second transitional region 7 of said wheel plate 4 into said wheel hub 5. Said wheel rim 1 is limited by an external edge 8, an internal edge 9 and has width H1. The wheel plate 4 is defined by points L, J on the first flank side and by the points F, K on the other flank side. A plane P1 passes through the railway wheel in point K, which plane P1 is perpendicular to the rotation axis Z of the wheel and its distance H2 to the internal edge 9 of the wheel rim 1 is equal to 0.4 to 0.65 multiple of the wheel rim 1 width H1. The cross-sectional wheel plate 4 profile between the transitional regions 6 and 7 on the first flank side of the wheel formed by a first line P2, which is perpendicular to the rotation axis Z of the wheel and its distance T2 to the plane P1 is equal to 0.05 to 0.15 multiple of the total width H1 of the wheel rim 1. The cross-sectional profile of the wheel plate 4 between the transitional regions 6 and 7 on its second wheel flank side is formed by an arch K1 having radius R4 and by a second line P3 passing through the point F, which is the starting point of the transition from the wheel plate 4 into the wheel hub 5 and its distance T3 to the first line P2 is equal to 0.2 to 0.45 multiple of the wheel rim 1 width H1 and at the same time its distance R3 to the rotation axis Z of the wheel is in the range from 0.35 to 0.45 multiple of the external wheel radius R1. The first line P2 and the second line P3 intersect on the first flank side 4 of the wheel in point D, which point D is having the distance R2 to the rotation axis Z, which distance R2 is in the range from 0.65 to 0.85 multiple of the external wheel radius R1. The arch K1 on the other flank side of the wheel plate 4 is tangentially connected to the second line P3 and simultaneously to the plane P1 and to the section formed by line segment limited by points H and I, of which point H is situated on the second line P3 between point F and intersection point G of the second line P3 with plane P1 and where point I is situated in line P1 between the intersection point G and point B, which point B is also situated in the plane P1 at a distance R2 to the rotation axis Z of the wheel, which distance R2 is equal to the distance R2 of the point D to this rotation axis Z. The distance H3 represents the line segment length between points F and G and the distance H4 then the line segment length between points G and B. The transitional region 6 from the wheel plate 4 into the wheel rim 1 is formed by arch K2, which arch K2 is tangentially connected to the arch K1 in point K and by arch K3 which arch K3 is tangentially connected to the first line P2 in point J. The transitional region 7 from the wheel plate 4 into the wheel hub 5 is formed by arch K4, which arch K4 is tangentially connected to the second line P3in point F and by arch K5, which arch K5 is tangentially connected to the first line P2 in point L.

### Example 3

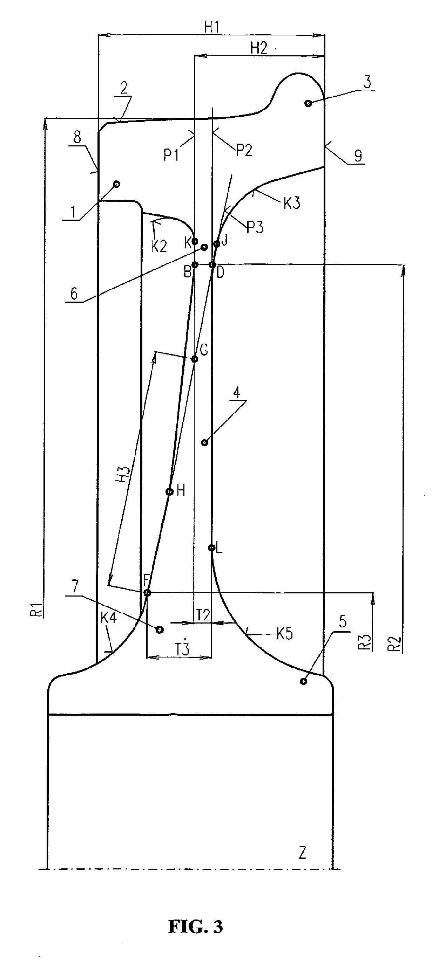

A railway wheel shown in Fig. 3 has an external radius R1 and is comprised of a wheel rim 1 with a rolling surface 2 and a flange 3, of a wheel plate 4, of a wheel hub 5, of a first transitional region 6 of said wheel plate 4 into said wheel rim 1 and of a second transitional region 7 of said wheel plate 4 into said wheel hub 5. Said wheel rim 1 is limited by an external edge 8, an internal edge 9 and has width H1. The wheel plate 4 is defined by points L, J on the first flank side and by the points F, K on the other flank side. A plane P1 passes through the railway wheel in point K, which plane P1 is perpendicular to the rotation axis Z of the wheel and its distance H2 to the internal edge 9 of the wheel rim 1 is equal to 0.4 to 0.65 multiple of the wheel rim 1 width H1. The cross-sectional wheel plate 4 profile between the transitional regions 6 and 7 on the first flank side of the wheel formed by a first line P2, which line P2 is perpendicular to the rotation axis Z of the wheel and its distance T2 to the plane P1 is equal to 0.05 to 0.15 multiple of the total width H1 of the wheel rim 1 and further by a second line P3 in section DJ. The cross-sectional profile of the wheel plate 4 between transitional regions 6 and 7 is on its second flank side formed by two straight sections HB and BK and by second line P3 passing through point F, which point F is the starting place for transition from the wheel plate 4 into the wheel hub 5 and has distance T3 to the first line P2 equal to 0.2 to 0.45 multiple of the wheel rim 1 width H1 and at the same time the distance R3 to the rotation axis Z of the wheel is within the range from 0.35 to 0.45 multiple of the external radius R1 of the wheel. The first line P2 and the second line P3 intersect on the first flank side of the wheel plate 4 in point D, whereby, the distance R2 from the point D to the rotation axis Z of the wheel is within the range from 0.65 to 0.85 multiple of the external radius R1 of the wheel. So the second line P3 forms a part of both sides of the wheel plate 4 in sections FH and DJ. The point B is situated in plane P1 between point K and intersection point G of the second line P3 with the plane P1 at the distance R2 to the rotation axis Z of the wheel, which distance R2 is equal to the distance R2 of the point D to the rotation axis Z of the wheel. On the second line P3 between point F and the intersection point G of the second line P3 with plane P1 is point H and the distance H3 represents length of the line segment between points F and G. The transitional region 6 from the wheel plate 4 into the wheel rim 1 is formed by arch K2, which arch K2 is tangentially connected to the straight section BK in point K and by, which arch K3 is tangentially connected to the second line P3 in point J. The transitional region 7 from the wheel plate 4 to the wheel hub 5 is formed by arch K4, which arch K4 is tangentially connected to the second line P3 in point F and by arch K5, which arch K5 is tangentially connected to the first line P2 in point L.

### Example 4

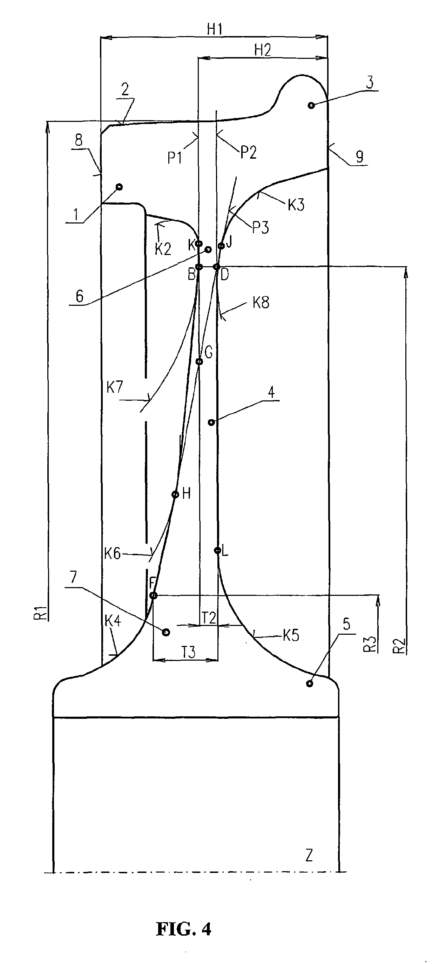

A railway wheel shown in Fig. 4 has an external radius R1 and is comprised of a wheel rim 1 with a rolling surface 2 and a flange 3, of a wheel plate 4, of a wheel hub 5, of a first transitional region 6 of said wheel plate 4 into said wheel rim 1 and of a second transitional region 7 of said wheel plate 4 into said wheel hub 5. Said wheel rim 1 is limited by an external edge 8, an internal edge 9 and has width H1. The wheel plate 4 is defined by points L and J on the first flank side and by points F and K on the other flank side. A plane P1 passes through the railway wheel in point K, which plane P1 is perpendicular to the rotation axis Z of the wheel and its distance H2 to the internal edge 9 of the wheel rim 1 is equal to from 0.4 to 0.65 multiple of the wheel rim 1 width H1. The cross-sectional wheel plate 4 profile between the transitional regions 6 and 7 on the first flank side of the wheel is formed by a first line P2, which first line P2 is perpendicular to the rotation axis Z of the wheel and its distance T2 to the plane P1 is equal to 0.05 to 0.15 multiple of the wheel rim 1 width H1 and further by the second line P3 in the section DJ. The cross-sectional profile of the wheel plate 4 between transitional regions 6 and 7 on the other flank side of the wheel is formed by two straight sections HB and BK and by the second line P3 passing through point F, which point F is the starting point of transition from the wheel plate 4 to the wheel hub 5 and has distance T3 to the first line P2, which distance T3 is equal to from 0.2 to 0.45 multiple of the wheel rim 1 width H1 and at the same time its distance R3 to the rotation axis Z of the wheel is in the range from 0.35 to 0.45 multiple of the external radius R1 of the wheel. The first line P2 and the second line P3 intersect in point D on the other flank side of the wheel plate 4, whereby, the distance R2 from the point D to the rotation axis Z of the wheel is in the range from 0.65 to 0.85 multiple of the external radius R1 of the wheel. So the second line P3 forms a part of the wheel plate 4 on both flank sides. The point H is situated on the second line P3 between point F and the intersection point G of the second line P3 with plane P1 and the point B is situated in plane P1 at the distance R2 to the rotation axis Z of the wheel, which distance R2 is equal to the distance R2 of the point D to the rotation axis Z of the wheel. On both sides of the wheel plate 4 the mutual transition of individual straight sections is formed by arches K6, K7 and K8. The transitional region 6 from the wheel plate 4 into the wheel rim 1 is formed by arch K2, which arch K2 is tangentially connected to the straight section BK in point K and by arch K3, which arch K3 is tangentially connected to the second line P3 in point J. The transitional region 7 from the wheel plate 4 into the wheel hub 5 is formed by arch K4, which arch K4 is tangentially connected to the second line P3 in point F and by arch K5, which arch K5 is tangentially connected to the first line P2 in point L.

### Industrial Use

The railway wheel according to the present invention will find use in all models of railway vehicles, i.e. in mono-blocks, compounded wheels and wheels damped e.g. by rubber.

## Claims

1. A railway wheel with balanced stress field, which wheel is having a theoretical internal plane (P1) perpendicular to the rotation axis (Z) of the wheel, which wheel is comprised of a wheel rim (1) formed by a rolling area (2) and a flange (3), a wheel plate (4) having in its cross-section its first flank side formed by a first line (P2) perpendicular to the rotation axis (Z) of the wheel, of a wheel hub (5) and of transitional regions (6, 7) between said wheel plate (4) and said wheel rim (1) and between said wheel plate (4) and said wheel hub (5), which transitional regions (6, 7) are having in their cross-sections on both their flank sides the form of arches, **characterized in that** said plane (P1) passes through a point (K), which point (K) is the starting point of a transition of the second flank side of said wheel plate (4) into said transitional region (6) between said wheel plate (4) and said wheel rim (1) and its distance (H2) to the internal edge (9) of said wheel rim (1) is equal to 0.4 to 0.65 multiple of said wheel rim (1) width (H1), whereby, between said transitional regions (6, 7) the second flank side of said wheel plate (4) is formed on the one hand by a second line (P3) passing through a point (F), which point (F) is the place where said wheel plate (4) transits into a transitional region (7) between said wheel plate (4) and said wheel hub (5), and on the other hand by at least one further line and/or arch (K1), whereby said first and said second lines (P2, P3) intersect in a point (D) situated in said first flank side of said wheel plate (4).

2. A railway wheel according to claim 1 **characterized in that** said first flank side of said wheel plate (4) is formed by said second line (P3) in the region from a point (D) to a point (J), which point (J) is the starting point of the transition of said wheel plate (4) into said transitional region (6) between said wheel plate (4) and said wheel rim (1) .

3. A railway wheel according to claims 1 or 2 **characterized in that** the transition places between individual straight sections are formed by arches on both flank sides of said wheel plate (4).

4. A railway wheel according to claims 1 to 3 **characterized in that** said arch (K1) is tangentially connected to said second line (P3) and simultaneously to said plane (P1) and/or to a section formed by two points (H, I), of which said first point (H) is situated on said second line (P3) between said point (F) and an intersection point (G) of said second line (P3) with said plane (P1) and where said second point (I) is situated in said plane (P1), in the section from said intersection point (G) to a point (B), which point (B) is situated in plane (P1) in a distance (R2) to the rotation axis (Z) of said wheel, which distance (R2) is equal to the distance (R2) of said point (D), in which point (D) both lines (P2, P3) intersect, from said rotation axis (Z).

5. A railway wheel according to claims 1 to 4 **characterized in that** said first line (P2) is situated in the distance (T2) from said plane (P1), which distance (T2) is in the range from 0.05 to 0.15 multiple of the wheel rim (1) width (H1).

6. A railway wheel according to claims 1 to 5 **characterized in that** the distance (T3) of said point (F) from said first line (P2) is in the range from 0.2 to 0.45 multiple of the wheel rim (1) width (H1) and the distance (R3) of said point (F) from said rotation axis (Z) of said wheel is in the range from 0.35 to 0.45 multiple of the external radius (R1) of said wheel.

7. A railway wheel according to claims 1 to 6 **characterized in that** the distance (R2) from the point (D) to the rotation axis (Z) of said wheel is in the range from 0.65 to 0.85 multiple of the external radius (R1) of said wheel.

## Patentansprüche

1. Ein Eisenbahnrad mit einem ausgeglichenen Spannungsfeld, welches Rad eine theoretische innere Ebene (P1) hat, die senkrecht zur Rotationsachse (Z) des Rads verläuft, welches Rad aus einem durch eine Fahrfläche (2) und ein Spurkranz (3) geformten Radkranz (1), aus einer Radplatte (4), die in ihrem Querschnitt ihre erste durch eine erste Gerade (P2) geformte senkrecht zur Rotationsachse (Z) des Rads orientierte Flankenseite hat, aus einer Radnabe (5), und aus in ihren Querschnitten an beiden ihren Flankenseiten zwischen der Radplatte (4) und dem Radkranz (1) und zwischen der Radplatte (4) und der Radnabe (5) die Form der Bögen habenden Übergansgebieten (6, 7) zusammensetzt, **dadurch gekennzeichnet, dass** die Ebene (P1) durch einen Punkt (K) geht, welcher Punkt (K) der Anfangspunkt des Übergangs der zweiten Flankenseite der Radplatte (4) in das Übergangsgebiet (6) zwischen der Radplatte (4) und dem Radkranz (1) ist, und sein Abstand (H2) zur inneren Kante (9) des Radkranzes (1) dem 0,4- bis 0,65-fachem der Breite (H1) des Radkranzes (1) gleich ist, wobei die zweite Flankenseite der Radplatte (4) zwischen den Übergansgebieten (6, 7) einerseits durch eine zweite Gerade (P3), die durch einen Punkt (F), der die Stelle des Anfangs des Übergangs der Radplatte (4) in den Übergangsgebiet (7) zwischen der Radplatte (4) und der Radnabe (5) ist, und andererseits durch mindestens eine weitere Gerade und/oder Bogen (K1) geformt ist, wobei die erste und die zweite Geraden (P2, P3) sich in einem Punkt (D), der auf der ersten Flankenseite der Radplatte (4) situiert ist, kreuzen.

2. Ein Eisenbahnrad nach Anspruch 1, **dadurch gekennzeichnet, dass** die erste Flankenseite der Radplatte (4) im Gebiet vom Punkt (D) bis zum Punkt (J), der die Stelle des Anfangs des Übergangs der Radplatte (4) in das Übergangsgebiet (6) zwischen der Radplatte (4) und dem Radkranz (1) ist, durch die zweite Gerade (P3) gebildet ist.

3. Ein Eisenbahnrad nach Ansprüchen 1 oder 2, **dadurch gekennzeichnet, dass** die Übergangsgebieten zwischen einzelnen geraden Abschnitten an beiden Flankenseiten der Radplatte (4) durch Bögen geformt sind.

4. Ein Eisenbahnrad nach Ansprüchen 1 bis 3, **dadurch gekennzeichnet, dass** der Bogen (K1) an die zweite Gerade (P3) und gleichzeitig an eine Ebene (P1) und/oder an ein Gebiet, der durch zwei Punkten (H, 1) gebildet ist, tangential angeschlossen ist, von welchen Punkten (H, 1) der erste Punkt (H) auf der zweiten Geraden (P3), zwischen dem Punkt (F) und dem Kreuzungspunkt (G) der zweiten Geraden (P3) mit der Ebene (P1) situiert ist, und wo der zweite Punkt (1) in der Ebene (P1), im Abschnitt vom Kreuzungspunkt (G) bis zum Punkt (B), welcher Punkt (B) sich in der Ebene (P1) in einem Abstand (R2) zur Rotationsachse (Z) des Rads befindet, welcher Abstand (R2) mit dem Abstand (R2) des Punkts (D) von der Rotationsachse (Z) des Rads gleich ist, in welchem Punkt (D) sich beide Geraden (P2, P3) durchkreuzen, situiert ist.

5. Ein Eisenbahnrad nach Ansprüchen 1 bis 4, **dadurch gekennzeichnet, dass** die erste Gerade (P2) im Abstand (T2) zur Ebene (P1) situiert ist, welcher Abstand (T2) im Bereich des 0,05- bis 0,15-fachen der Breite (H1) des Radkranzes (1) ist.

6. Ein Eisenbahnrad nach Ansprüchen .1 bis 5, **dadurch gekennzeichnet, dass** der Abstand (T3) des Punktes (F) zur ersten Geraden (P2) im Bereich des 0,2 bis 0,45-fachen der Breite (H1) des Radkranzes (1) ist, und der Abstand (R3) des Punktes (F) zur Rotationsachse (Z) des Rads im Bereich des 0,35- bis 0,45-fachen des Außenradius (R1) des Rads ist.

7. Ein Eisenbahnrad nach Ansprüchen 1 bis 6, **dadurch gekennzeichnet, dass** der Abstand (R2) des Punktes (D) zur Rotationsachse (Z) des Rads im Bereich des 0,65-bis 0,85-fachen des Außenradius (R1) des Rads ist.

## Revendications

1. Roue ferroviaire présentant un champ de tension équilibré et le plan (P1) intérieur théorique perpendiculaire à l'axe (Z) de rotation de la roue comprenant une couronne (1) de roue comportant une surface (2) de roulement et un boudin (3), une plaque (4) de roue présentant dans sa section transversale sa première face laterale définie par la première droite (P2) perpendiculaire à l'axe (Z) de rotation de la roue, un moyeu (5) de roue et des zones (6,7) de raccordement s'étendant entre la plaque (4) de roue et la couronne (1) de roue et entre la plaque (4) de roue et le moyeu (5) de roue, les zones de raccordement présentent dans leurs sections transversales, sur les deux de leurs faces, une courbure en forme d'arc, **caractérisée en ce que** ledit plan (P1) passe par le point (K) étant le lieu de l'origine de transition de la deuxième face laterale de ladite plaque (4) de roue à ladite zone (6) de raccordement entre ladite plaque (4) de roue et ladite couronne (1) de roue, la distance (H2) dudit plan (P1) à l'arête (9) intérieure de ladite couronne (1) de roue est comprise entre 0,2 et 0,65 fois la largeur (H1) de ladite couronne (1), la deuxième face laterale de ladite plaque (4) de roue est définie, entre desdites zones (6,7) de raccordement, d'une part par la deuxième droite (P3) passant par le point (F) étant un lieu de l'origine de transition de ladite plaque (4) de roue à ladite zone (7) de raccordement entre ladite plaque (4) de roue et ledit moyeu (5) de roue, et d'autre part par au moins une autre droite et/ou par l'arc (K1), les premières et les deuxièmes droites (P2, P3) s'entrecoupent dans le point (D) situé sur la première face laterale de ladite plaque (4) de roue.

2. Roue ferroviaire selon la revendication 1, **caractérisée en ce** gue la première face laterale de ladite plaque (4) de roue est définie par la deuxième droite (P3) située dans un secteur du point (D) au point (J) étant un lieu de l'origin de transition de ladite plaque (4) de roue à ladite zone (6) de raccordement entre ladite plaque (4) de roue et ladite couronne (1) de roue.

3. Roue ferroviaire selon la revendication 1 ou 2, **caractérisée en ce** gue lesdites zones de raccordement entre des secteurs directs respectifs sur les deux faces laterales de ladite plaque (4) sont courbées en arc.

4. Roue ferroviaire selon l'une quelconque des revendications 1 à 3, **caractérisée en ce** gue l'arc (K1) est raccordé d'une manière sécante à ladite deuxième droite (P3) et simultanément audit plan (P1) et/ou au secteur défini par deux points (H,1), le premier point (H) est situé sur ladite deuxième droite (P3) entre le point (F) et le point d'intersection (G) de ladite deuxième droite (P3) et dudit plan (P1), le deuxième point (I) est situé dans un plan (P) au secteur s'étendant du point d'intersection (G) au point (B) situé dans ledit plan (P1) et éloigné de l'axe (Z) de rotation de roue à une distance (R2), ladite distance (R2) est congrue avec la distance (R2) dudit point (D) d'intersection des deux droites (P2, P3) à ladite axe (Z) de rotation de roue.

5. Roue ferroviaire selon l'une quelconque des revendications 1 à 4, **caractérisée en ce** gue la distance (T2) de ladite première droite (P2) audit plan (P1) est comprise entre 0,05 et 0,15 fois la largeur (H1) de ladite couronne (1) de roue.

6. Roue ferroviaire selon l'une quelconque des revendications 1 à 5, **caractérisée en ce** gue la distance (T3) dudit point (F) à ladite première droite (P2) est comprise entre 0,2 et 0,45 fois la largeur (H1) de ladite couronne (1) de roue, et la distance (R3) dudit point (F) à ladite axe (Z) de la rotation de roue est comprise entre 0,35 et 0,45 fois le rayon (R1) exterieur de roue.

7. Roue ferroviaire selon l'une quelconque des revendications 1 à 6, **caractérisée en ce** gue ladite distance (R2) dudit point (D) à ladite axe (Z) de rotation de roue est comprise entre 0,65 et 0,85 fois ledit rayon (R1) extérieur de roue.
